# EUROPÄISCHE PATENTSCHRIFT

(11) **EP 0 878 509 B1**
(45) Veröffentlichungstag und Bekanntmachung des Hinweises auf die Patenterteilung: **25.07.2001**
(21) Anmeldenummer: 98105413.3
(22) Anmeldetag: 26.03.1998
(51) Int. Cl.: C08L 77/00, C08L 101/00, C08L 27/12, C08L 67/02, B32B 27/34, B32B 27/36, F16L 9/12

(54) **Haftvermittler für einen Mehrschichtverbund**
Adhesion promoter for multilayered composite
Promoteur de adhesion pour composites multicouches

(30) Priorität: 15.05.1997 DE 19720317
(43) Veröffentlichungstag der Anmeldung: 18.11.1998
(73) Patentinhaber: Degussa AG, 40474 Düsseldorf (DE)
(72) Erfinder: Ries, Hans, Dr., 45772 Marl (DE); Schlobohm, Michael, Dr., 44139 Dortmund (DE); Schmitz, Guido, Dr., 48249 Dülmen (DE)

(56) Entgegenhaltungen:
- EP-A- 0 618 390
- EP-A- 0 637 511
- EP-A- 0 649 739
- EP-A- 0 673 762
- US-A- 5 061 757
- US-A- 5 278 231
- US-A- 5 317 059
- US-A- 5 475 058

## Beschreibung

Gegenstand der Erfindung ist ein Mehrschichtverbund, der unter Verwendung eines bestimmten Haftvermittlers hergestellt wird, sowie eine Formmasse, die als Haftvermittler eingesetzt werden kann.

Bei der Entwicklung von Mehrschichtverbunden, die zum Beispiel als Rohr zur Führung flüssiger oder gasförmiger Medien in Kraftfahrzeugen eingesetzt werden, müssen die verwendeten Formmassen eine ausreichende Beständigkeit gegenüber den zu führenden Medien aufweisen, und die Rohre müssen allen an sie gestellten mechanischen Anforderungen gewachsen sein. Derartige Forderungen sind z. B. in entsprechenden Normen festgelegt (DIN 73378; SAE J2260) oder aber in Spezifikationen der Kraftfahrzeughersteller verankert (z.B. General Motors GM213M; Opel GME08100; Ford WSS-M98D33-A).

Ein besonders kritischer Punkt ist hierbei die Beständigkeit der Schichtenhaftung auch nach langfristigem Kontakt mit heißen, alkoholhaltigen Flüssigkeiten, wie sie z.B. alkoholhaltige Kraftstoffe oder Wasser/Ethylenglykol-Gemische darstellen.

Bei den meisten bekannt gewordenen Mehrschichtrohren wird die Haftung, z. B. zwischen den die Festigkeit gebenden Polyamid-Schichten und den entsprechenden Sperr- oder Schutzschichten, durch Verwendung von Haftvermittlern erzeugt. Entsprechende Verbunde werden beispielsweise in der DE-A-38 21 723, der DE-A-42 14 383, der DE-A-44 34 530, der EP-A-0 618 390 und der EP-A-0 649 739 beschrieben.

Es hat sich jedoch vielfach gezeigt, daß die Bindungen zwischen den Verbundpartnern A oder B und einem Haftvermittler C gegenüber einem Angriff durch die zu führenden Medien nur eine begrenzte Stabilität aufweisen. Nach längerem Kontakt, insbesondere bei höheren Temperaturen, kommt es zum Bindungsbruch und damit zu unzulässigem Nachlassen der Haftkräfte bis hin zum Totalverlust.

Aus diesem Grund wurden Versuche unternommen, die Haftung an den Schichtgrenzen über Werkstoffverträglichkeit zu erzeugen, indem Schmelzemischungen der beiden Komponenten A und B als Haftvermittler C verwendet werden (EP-A-0 523 644; JP Kokai 7-53823; DE-A-44 34 530). Sind die Komponenten A und B selbst kraftstoffbeständig, so würde zumindest an der Grenzfläche A zu C bzw. B zu C keine Trennung erfolgen, wenn es gelingen würde, jeweils in der Grenzfläche einen ausreichend hohen Anteil der Komponente A in C mit der Schicht A und einen ausreichend hohen Anteil der Komponente B in C mit der Schicht B in Verbindung zu bringen.

Bei derartigen 2-Komponenten-Blends tritt allerdings in der Regel das Problem auf, daß sich die beiden unverträglichen Komponenten A und B in den bei der Verarbeitung auftretenden Scher- und Dehnströmungen entmischen. Somit wird in der Regel nur zu einer der beiden Komponenten eine Verbindung erhalten. Im übrigen ist die Morphologie der Haftvermittlerschicht meist faserig ausgebildet, weshalb der Haftvermittler somit keine ausreichend hohe mechanische Festigkeit hat und bei Ermittlung der Schälfestigkeit, z. B. nach ISO 8033, nur relativ geringe Kräfte ermittelt werden.

Es wurden daher bereits Versuche unternommen, durch Zugabe eines Verträglichkeitsvermittlers die Entmischung der Komponenten A und B im Haftvermittler C zu vermeiden. Insbesondere bei der Verbindung von Polyamid mit Fluorpolymeren kamen hierbei bevorzugt thermoplastische Polyurethane (TPU) zum Einsatz (JP-A-07053824). Besteht eine der beiden Komponenten A oder B aus einem Fluorpolymer, so sind allerdings für die Verarbeitung des Haftvermittlers Temperaturen von 230 °C und höher erforderlich. Dies führt insbesondere bei längeren Verweilzeiten zum Abbau des TPU, was die Wirksamkeit und die Verarbeitungsfreundlichkeit des Haftvermittlers drastisch einschränkt. Im übrigen hat es sich gezeigt, daß die Viskosität herkömmlicher TPU-Formmassen zu niedrig ist, um im Compoundierschritt ausreichend hohe Spannungen auf die Komponenten A und B auszuüben, um diese fein genug ineinander zu dispergieren und somit eine zusätzliche mechanische Verkrallung der Komponenten ineinander zu bewirken, die bei einem - theoretisch denkbaren - Versagen der Anbindung an den Grenzflächen der einzelnen Phasen innerhalb des Haftvermittlers ausreicht, die mechanische Verbindung weiterhin in ausreichender Güte zu gewährleisten.

Fernerhin konnte festgestellt werden, daß das Zustandekommen einer ausreichenden Haftung bei derartigen Haftvermittlern immer noch stark von den auftretenden Dehn- und Scherspannungen abhängig ist. Dies bedeutet, daß die Haftung eines Mehrschichtverbundes in Form eines Hohlprofils, einer Folie, eines Blaskörpers oder eines Mehrkomponenten-Spritzgußteils weiterhin stark von der Geometrie des Artikels, dem Werkzeugdesign und den Verarbeitungsbedingungen abhängt.

Ein anderer Weg wurde in der EP-A-0 618 390 und der EP-A-0 649 739 vorgeschlagen. Dort soll der Haftvermittler aus zwei Komponenten bestehen, deren eine mit dem Material der Schicht A identisch und deren andere mit dem Material der Schicht B verträglich ist, wobei zwischen diesen beiden Komponenten im Haftvermittler ebenfalls eine gewisse Verträglichkeit besteht. Im konkreten Fall der Verwendung von Polyamid als Schichtmaterial A und Polyvinylidenfluorid als Schichtmaterial B besteht hier der Haftvermittler aus einem Blend aus Polyamid und einem Poly(alkyl)acrylsäureester bzw. einem Polyglutarimid.

Bei diesen Verbunden werden gute Anfangsfestigkeiten erhalten, die jedoch bei thermischer Belastung des Verbundes, je nach den gewählten Bedingungen, teilweise oder sogar vollständig wieder verlorengehen. Dies ist beispielsweise beim Thermoformen entsprechender Mehrschichtrohre ein ernstes Problem, wenn fehlerbedingt die üblichen Wärmebehandlungszeiten überschritten werden.

Mehrschichtrohre, die z. B. im Kraftfahrzeugsektor als kraftstofführende Leitungen eingesetzt werden, besitzen meist eine hohe Steifigkeit. Da sie nicht als gerade Leitung in einem PKW verlegt werden können, müssen diese Leitungen thermogeformt werden. Bei diesem Umformverfahren wird das vorher gerade Rohr bleibend so verformt, daß es Biegungen und Krümmungen an bestimmten, geforderten Stellen beibehält.

Eine heutzutage weit verbreitete Methode des Thermoformens von Rohren ist das Thermoformen mit Polyethylenglykol. Bei diesem Verfahren wird das Rohr in der Regel in eine Schablone eingelegt und samt Schablone in ein Polyethylenglykolbad eingetaucht. Dieses Bad ist auf eine dem Werkstoff des Rohres entsprechende Temperatur aufgeheizt, so daß sich das Rohr von außen erwärmt und weich wird. Damit werden die inneren Widerstände des Rohres gegen die Biegung abgebaut, das heißt, die durch die Biegung eingebrachten Spannungen relaxieren. Allerdings hat sich gezeigt, daß hierbei auch die Haftung an den Grenzschichten des Verbundes auf Werte zurückgeht, die in vielen Fällen nicht mehr akzeptiert werden können.

Wenn Mehrschichtrohre als Kühlflüssigkeitsleitung verwendet werden, muß ebenfalls mit einer derartigen Anfälligkeit gerechnet werden.

Aufgabe der vorliegenden Erfindung ist es daher, einen Mehrschichtverbund mit einem Haftvermittler bereitzustellen, bei dem sich die beiden unverträglichen Komponenten A und B bei der Verarbeitung nicht entmischen und der als aufgebrachte Schicht eine hohe mechanische Festigkeit hat. Hierzu sollte ein Polymeres beigemischt werden, das unter den Verarbeitungsbedingungen thermisch stabil ist und gleichzeitig eine feine Dispergierung der Komponenten A und B bewirkt. Für die Gebrauchstüchtigkeit von besonderer Bedeutung ist hierbei, daß eine hohe Anfangshaftung erhalten werden soll, die bei längerem Kontakt mit organischen Medien wie z. B. Kraftstoffen oder Kühlflüssigkeit sowie bei thermischer Belastung des Verbundes möglichst weitgehend erhalten bleibt.

Die Aufgabe wird gelöst durch einen Mehrschichtverbund, der die Schichtenkonfiguration A/C/B enthält, wobei
I. die Schicht A aus einer Formmasse besteht, die zu mindestens 50 Gew.-% ein aminogruppenhaltiges Polymeres als Polymer A enthält und
II. die Schicht B aus einer Formmasse besteht, die zu mindestens 50 Gew.-% ein Polymer B enthält, während
III. die Schicht C aus einer Formmasse besteht, die im wesentlichen aus folgenden Komponenten besteht:
   a) 5 bis 95 Gew.-Tln. des Polymeren A,
   b) 95 bis 5 Gew.-Tln. des Polymeren B, wobei die Summe der Komponenten a) und b) 100 Gew.-Tle. ergibt, sowie
   c) 1 bis 90 Gew.-Tln. eines Verträglichkeitsvermittlers aus einem (Alkyl)acrylsäureester-Polymeren.

Das aminogruppenhaltige Polymere kann beispielsweise ein Polyamid oder ein aminiertes Polyolefin sein.

Als Polyamid kommen in erster Linie aliphatische Homo- und Copolyamide in Frage. Als Beispiel seien die 4.6-; 6.6-; 6.12-; 8.10-; 10.10-Polyamide o. ä. genannt. Bevorzugt werden 6-; 10.12-; 11-; 12.12- sowie insbesondere 12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α,ω-Aminocarbonsäure bzw. von dem davon abgeleiteten Lactam ausgegangen worden ist - H. Domininghaus, Die Kunststoffe und ihre Eigenschaften, Seite 272, VDI-Verlag (1976).]

Sofern Copolyamide verwendet werden, können diese z. B. Adipinsäure, Sebacinsäure, Korksäure, Isophthalsäure, Terephthalsäure als Cosäure bzw. Bis(4-aminocyclohexyl)methan, Trimethylhexamethylendiamin, Hexamethylendiamin o. ä. als Codiamin enthalten.

Die Herstellung dieser Polyamide ist bekannt (z. B. D. B. Jacobs, J. Zimmermann, Polymerization Processes, S. 424-67; Interscience Publishers, New York (1977); DE-AS 21 52 194).

Ebenfalls geeignet als Polyamide sind gemischte aliphatisch/aromatische Polykondensate, wie sie z. B. in den US-PSS 2 071 250, 2 071 251, 2 130 523, 2 130 948, 2 241 322, 2 312 966, 2 512 606, 3 393 210 bzw. in Kirk-Othmer, Encyclopedia of Chemical Technology, 3. Aufl., Vol. 18, Wiley & Sons (1982), S. 328 und 435, beschrieben werden. Als Polyamide geeignete Polykondensate sind gleichfalls Poly(etheresteramide) bzw. Poly(etheramide). Derartige Produkte werden z. B. in den DE-OSS 27 12 987, 25 23 991 und 30 06 961 beschrieben.

Es wird bevorzugt, daß im Polyamid mindestens 10 % aller vorhandenen Endgruppen Aminoendgruppen sind. Besonders bevorzugt werden Polyamide eingesetzt, bei denen mindestens 50 % und insbesondere mindestens 70 % aller im Polyamid vorhandenen Endgruppen Aminoendgruppen darstellen. Darüber hinaus ist es von Vorteil, wenn die Aminoendgruppenkonzentration im Polyamid sich im Bereich von 30 bis 130 mmol/kg, vorzugsweise 60 bis 110 mmol/kg bewegt.

Aminierte Polyolefine können beispielsweise durch Umsetzung eines carbonsäure- oder anhydridgepfropften Polyolefins mit einem Überschuß an Diamin oder nach allen anderen Methoden des Standes der Technik hergestellt werden.

Das Polymere B ist vorzugsweise ein thermoplastischer Polyester oder ein Fluorpolymer.

Die thermoplastischen Polyester weisen nachstehende Grundstruktur auf 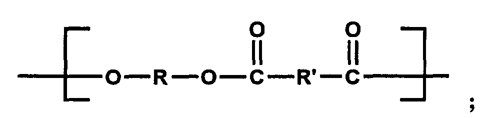 dabei stellt R einen divalenten, verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar.

Als Beispiel für Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein zweites, bereits oben genanntes Diol oder durch ein Diol mit nachstehender allgemeiner Formel 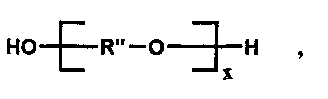 wobei R" einen zweiwertigen Rest mit 2 bis 4 C-Atomen bedeutet und x einen Wert von 2 bis 50 annehmen kann, ersetzt sein.

Bevorzugt als Diole werden Ethylenglykol und insbesondere Tetramethylenglykol eingesetzt.

Als aromatische Dicarbonsäuren kommen z. B. Terephthalsäure, Isophthalsäure, 1.4-, 1.5-, 2.6- bzw. 2.7-Naphthalindicarbonsäure, Diphensäure oder Diphenylether-4.4'-dicarbonsäure in Frage. Terephthalsäure ist bevorzugt.

Bis zu 20 Mol-% dieser Dicarbonsäuren können durch aliphatische Dicarbonsäuren wie z. B. Bernsteinsäure, Maleinsäure, Fumarsäure, Sebacinsäure, Dodecandisäure u. a. ersetzt sein.

Die Herstellung der thermoplastischen Polyester gehört zum Stand der Technik [DE-OSS 24 07 155, 24 07 156; Ullmanns Encyclopädie der technischen Chemie, 4. Aufl., Bd. 19, Seite 65 ff - Verlag Chemie GmbH, Weinheim, 1980)

Der Polyester kann, wie beispielsweise in der EP-A-0 569 681 beschrieben, auf die hier ausdrücklich Bezug genommen wird, 1 bis 40 Gew.-% einer mindestens zwei Isocyanatgruppen aufweisenden Verbindung enthalten. Hinsichtlich näherer Einzelheiten sei auf die genannte Schrift verwiesen.

Genauso kann der Polyester, wie beispielsweise in der EP-A-0 542 182 beschrieben, auf die hier ausdrücklich Bezug genommen wird, 1 bis 40 Gew.-% einer mindestens zwei Epoxygruppen aufweisenden Verbindung enthalten. Hinsichtlich näherer Einzelheiten sei auf diese Schrift verwiesen.

Entsprechend kann der Polyester auch 1 bis 40 Gew.-%, bevorzugt 1 bis 10 Gew.-% und besonders bevorzugt 1 bis 5 Gew.-% einer mindestens zwei Oxazolingruppen aufweisenden Verbindung enthalten, beispielsweise m-Phenylenbisoxazolin, p-Phenylenbisoxazolin, Tetramethylenbisoxazolin, Hexamethylenbisoxazolin oder Decamethylenbisoxazolin.

Als Fluorpolymere sind beispielsweise modifizierte Ethylen-Tetrafluorethylen-Copolymere (ETFE; z. B. Neoflon EP610 von Daikin Industries), Tetrafluorethylen-Hexafluorpropen-Vinylidenfluorid-Terpolymere (THV; z. B. THV 500 der Firma 3M), Ethylen-Chlortrifluorethylen-Copolymere (ECTFE; z. B. Halar von Ausimont) oder Polyvinylidenfluorid (PVDF) geeignet.

ETFE, THV und ECTFE sind beispielsweise in H. Domininghaus, Die Kunststoffe und ihre Eigenschaften, 4. Auflage, Kapitel 2.1.7 (Fluor-Kunststoffe) beschrieben.

Herstellung und Struktur von Polyvinylidenfluorid sind ebenfalls bekannt (Hans R. Kricheldorf, Handbook of Polymer Synthesis, Part A, Verlag Marcel Dekker Inc. New York - Basel - Hongkong, S. 191 f.; Kunststoff-Handbuch, 1. Auflage, Band XI, Carl Hanser Verlag München (1971), S. 403 ff).

Es können erfindungsgemäß auch Polymere auf Basis von Polyvinylidenfluorid enthalten sein, die bis zu 40 Gew.-% andere Monomere aufweisen. Als solche zusätzlichen Monomeren seien beispielsweise Trifluorethylen, Ethylen, Propen und Hexafluorpropen genannt.

Das (Alkyl)acrylsäureester-Polymer c) enthält vorzugsweise folgende Grundbausteine:
i) 14 bis 90 Gew.-%, bevorzugt 20 bis 85 Gew.-%, besonders bevorzugt 30 bis 70 Gew.-% 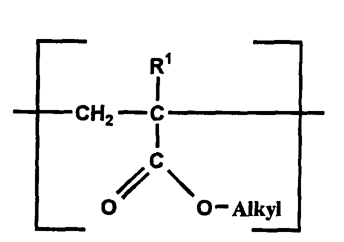
ii) 10 bis 80 Gew.- bevorzugt 10 bis 75 Gew.-%, besonders bevorzugt 20 bis 40 Gew.-% 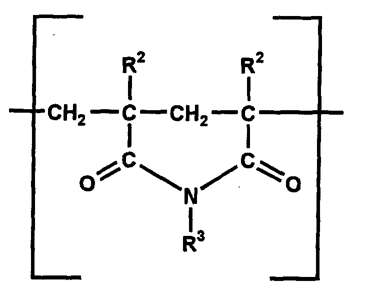
iii) 0 bis 30 Gew.-%, bevorzugt 0 bis 15 Gew.-%, besonders bevorzugt 1 bis 15 Gew.-% 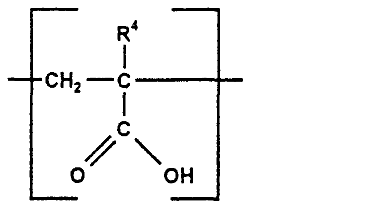
iiii) 0 bis 20 Gew.-%, bevorzugt 7 bis 20 Gew.-%, besonders bevorzugt 8 bis 12 Gew.-% 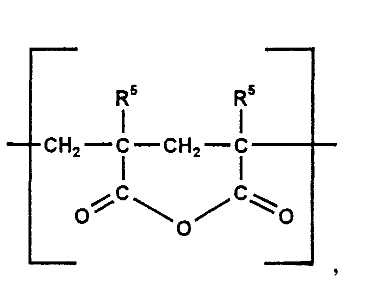
wobei Alkyl = Methyl, Ethyl, Propyl, Butyl, Pentyl, Hexyl,
R¹ bis R⁵ = (CₙH₂ₙ₊₁) mit n = bis 6
und die Substituenten gleich oder verschieden sein können.

Bevorzugt sind solche Grundbausteine, in denen Alkyl und R¹ bis R⁵ eine Methylgruppe darstellen.

Daneben können noch andere Monomere bis zu maximal 50 Gew.-% einpolymerisiert sein, wie z. B. Ethen, Styrol, Maleinsäureanhydrid, Itaconsäure, Glycidylacrylat und/oder Glycidylmethacrylat.

Polymere, die den Grundbaustein ii) enthalten, werden auch als Polyglutarimide bezeichnet Bei ihnen handelt es sich um Poly(alkyl)acrylsäureester, bei denen zwei benachbarte Carboxylatgruppen zu einem cyclischen Säureimid umgesetzt worden sind. Die Imidbildung wird bevorzugt mit Ammoniak bzw. primären Aminen, wie z. B. Methylamin, durchgeführt. Verwendet man hiervon wäßrige Lösungen, so entstehen durch Hydrolyse von Carboxylatgruppen als Nebenreaktion in gewissem Ausmaße gleichzeitig Gruppen des Typs iii) und iiii). Die erfindungsgemäß eingesetzten Produkte sowie ihre Herstellung sind bekannt (Hans R. Kricheldorf, Handbook of Polymer Synthesis, Part A, Verlag Marcel Dekker Inc. New York-Basel-Hongkong, S. 223 f.; H. G. Elias, Makromoleküle, Hüthig und Wepf Verlag Basel-Heidelberg-New-York; US-PSS 2 146 209 und 4 246 374).

Bevorzugt besteht der Haftvermittler im wesentlichen aus folgenden Komponenten:
a) 20 bis 80 Gew.-Tln. eines aminogruppenhaltigen Polymeren,
b) 80 bis 20 Gew.-Tln. eines Polymeren B,
   wobei die Summe der Komponenten a) und b) 100 Gew.-Tle. ergibt, sowie
c) 2 bis 30 Gew.-Tln. eines (Alkyl)acrylsäureester-Polymeren.

In den Schichten A und B können die restlichen 50 Gew.-% andere Thermoplaste sein, sofern diese die erfindungsgemäßen Eigenschaften nicht stören, wie z. B. Kautschuk als Schlagzähkomponente, oder übliche Hilfs- und Zuschlagstoffe wie z. B. Flammschutzmittel, Viskositätsverbesserer, Stabilisatoren, Weichmacher, Verarbeitungshilfsmittel, Füllstoffe, Pigmente oder Verstärkungsfasern. Die Menge der genannten Mittel ist so zu dosieren, daß die gewünschten Eigenschaften nicht ernsthaft beeinträchtigt werden.

Der erfindungsgemäße Mehrschichtverbund weist im bevorzugten Fall eine Schichtenhaftung zwischen der Schicht C und den Schichten A bzw. B, gemessen nach ISO 8033, von jeweils mindestens 10 N/cm auf.

Beim erfindungsgemäßen Mehrschichtverbund handelt es sich in einer Ausführungsform um ein Rohr oder um einen Behälter, insbesondere zur Leitung oder Bevorratung von Flüssigkeiten oder Gasen. Ein derartiges Rohr kann in gerader oder in gewellter Form ausgeführt sein oder es ist nur in Teilabschnitten gewellt. Wellrohre sind Stand der Technik, weshalb sich weitere Ausführungen hierzu erübrigen. Wichtige Einsatzzwecke sind die Verwendung als Kraftstoffleitung, als Tankeinfüllstutzen, als Vapor Line (d. h. Leitung, in der Kraftstoffdämpfe geleitet werden, z. B. Entlüftungsleitungen), als Tankstellenleitung, als Kühlflüssigkeitsleitung oder als Kraftstoffbehälter. In allen diesen Fällen ist bevorzugt, daß entweder die Schicht A oder die Schicht B aus einem Werkstoff besteht, der eine ausreichende Sperrwirkung gegen Diffusion des zu führenden Mediums besitzt.

Der erfindungsgemäße Mehrschichtverbund kann auch als flächiger Verbund vorliegen, beispielsweise als Verpackungsfolie für Lebensmittel, als Folie oder Verbundkörper mit Deckschicht zur Verbesserung der UV-Beständigkeit oder als extrudierte Mehrschichttafel, wobei etwa eine Fluorpolymer-Deckschicht einen Schutz vor Beschriftung bewirkt (Antigrafitti).

Bei der Verwendung des erfindungsgemäßen Mehrschichtverbundes zur Leitung oder Bevorratung von brennbaren Flüssigkeiten, Gasen oder Stäuben, wie z. B. Kraftstoff oder Kraftstoffdämpfen, empfiehlt es sich, eine der zum Verbund gehörenden Schichten oder eine zusätzliche Innenschicht elektrisch leitfähig auszurüsten. Dies kann durch Compoundieren mit einem elektrisch leitfähigen Zusatz nach allen Methoden des Standes der Technik geschehen. Als leitfähiger Zusatz können beispielweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere oder besonders vorteilhaft Graphitfibrillen entsprechend EP-A-0 730 115 verwendet werden. Es können auch Mischungen verschiedener leitfähiger Zusätze eingesetzt werden.

Im bevorzugten Fall befindet sich die elektrisch leitfähige Schicht in direktem Kontakt mit dem zu führenden oder zu bevorratenden Medium und besitzt einen Oberflächenwiderstand von maximal 10⁹ Ω/square.

Bei der Ausführung der erfindungsgemäßen Mehrschichtverbunde als Rohr kann dieses noch mit einer zusätzlichen Elastomerschicht ummantelt sein. Zur Ummantelung eignen sich sowohl vernetzende Kautschukmassen als auch thermoplastische Elastomere. Die Ummantelung kann sowohl mit als auch ohne Verwendung eines zusätzlichen Haftvermittlers auf das Rohr aufgebracht werden, beispielsweise mittels Extrusion über einen Querspritzkopf oder dadurch, daß ein vorgefertigter Elastomerschlauch über das fertig extrudierte Mehrschichtrohr geschoben wird.

Die Fertigung der Mehrschichtverbunde kann ein- oder mehrstufig erfolgen, beispielsweise mittels einstufiger Verfahren auf dem Wege der Coextrusion oder des Coextrusionsblasformens, oder mittels mehrstufiger Verfahren, wie z. B. in US 5 554 425 beschrieben.

Gegenstand der Erfindung sind auch vorteilhafterweise als Haftvermittler verwendbare Formmassen gemäß den Ansprüchen 1 bis 8.

Die Erfindung soll im folgenden beispielhaft erläutert werden.

### Beispiele:

Komponente a):
   - PA 1:: Polyamid 12 weichmacherfrei ( rel = 2,1; Aminoendgruppengehalt: 12 mmol/kg; Carboxylendgruppengehalt: 48 mmol/kg).
   - PA 2:: Polyamid 12 weichmacherhaltig, schlagzähmodifiziert ( rel = 2,1; Aminoendgruppengehalt: 13 mmol/kg; Carboxylendgruppengehalt: 48 mmol/kg; Weichmachergehalt auf 100 Gew.-Tle. Polyamid: 11 Gew.-Tle. N-n-Butylbenzolsulfonamid; zusätzlich 5 Gew.-Tle. maleinsäureanhydridmodifizierter Ethylen/Propylen-Kautschuk).
   - PA 3:: Polyamid 12 weichmacherhaltig ( rel = 2,1; Aminoendgruppengehalt: 50 mmol/kg; Carboxylendgruppengehalt: 12 mol/kg; Weichmachergehalt auf 100 Gew.-Tle. Polyamid: 15 Gew.-Tle. N-n-Butylbenzolsulfonamid).
Komponente b):
   - PVDF 1:: Polyvinylidenfluorid (Melt Flow Index: 12 g/10 min; DYFLOR LE, Hüls AG).
   - PBT 1 :: Polybutylenterephthalat, VESTODUR 2000, Hüls AG.
   - PBT 2:: Gemäß EP-A-0 569 683 modifiziertes Polybutylenterephthalat (VESTODUR X7298, Hüls AG).
Komponente c):
   - AAE:: Methacrylsäuremethylester-Polymer mit 56 Gew.-% Grundbaustein i), 30 Gew.-% Grundbaustein ii), 4 Gew.-% Grundbaustein iii), 10 Gew.-% Grundbaustein iiii).

Auf einem Zweischneckenkneter werden die in der Tabelle 1 aufgeführten Blends bei Schmelztemperaturen zwischen 260 °C und 280 °C durch Schmelzemischen hergestellt.

Zur Ermittlung der Brauchbarkeit dieser Blends als Haftvermittler werden zunächst 2-schichtige Bändchen coextrudiert, an denen manuell die Trennbarkeit der Schichten geprüft wird. Lassen sich die Schichten nicht trennen, wird die Haftung als "gut" bewertet. Läßt sich eine Trennung bereits mit geringem Kraftaufwand erreichen, wird die Haftung als "mäßig" beurteilt. Bei Verbunden, bei denen eine Schichtentrennung ohne merklichen Kraftaufwand möglich ist, wird die Haftung mit "keine" klassifiziert.

Weiterhin werden unter Variation der Verarbeitungsbedingungen 3-schichtige Rohre der Abmessungen 8 x 1 mm hergestellt. Der hierzu verwendete Extrusionskopf ist für die Schichtdicken (von außen nach innen) 0,6/0,2/0,2 mm ausgelegt. An diesen Rohren wird die Güte der Schichtenhaftung mittels Peel Test in Anlehnung an ISO 8033 ermittelt (siehe Tabelle 2).

Die mit R bezeichneten Mischungen sowie die mit N gekennzeichneten Beispiele sind nicht erfindungsgemäß.

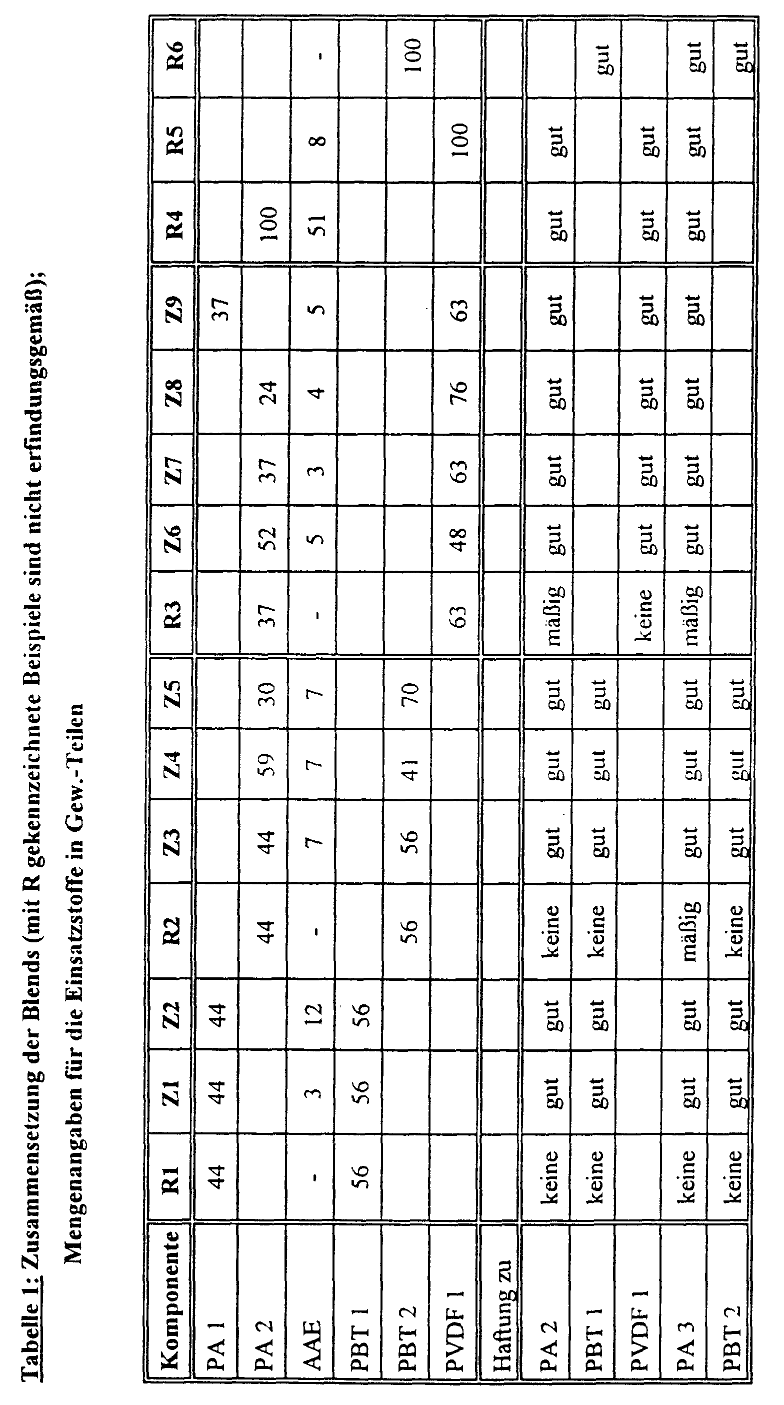

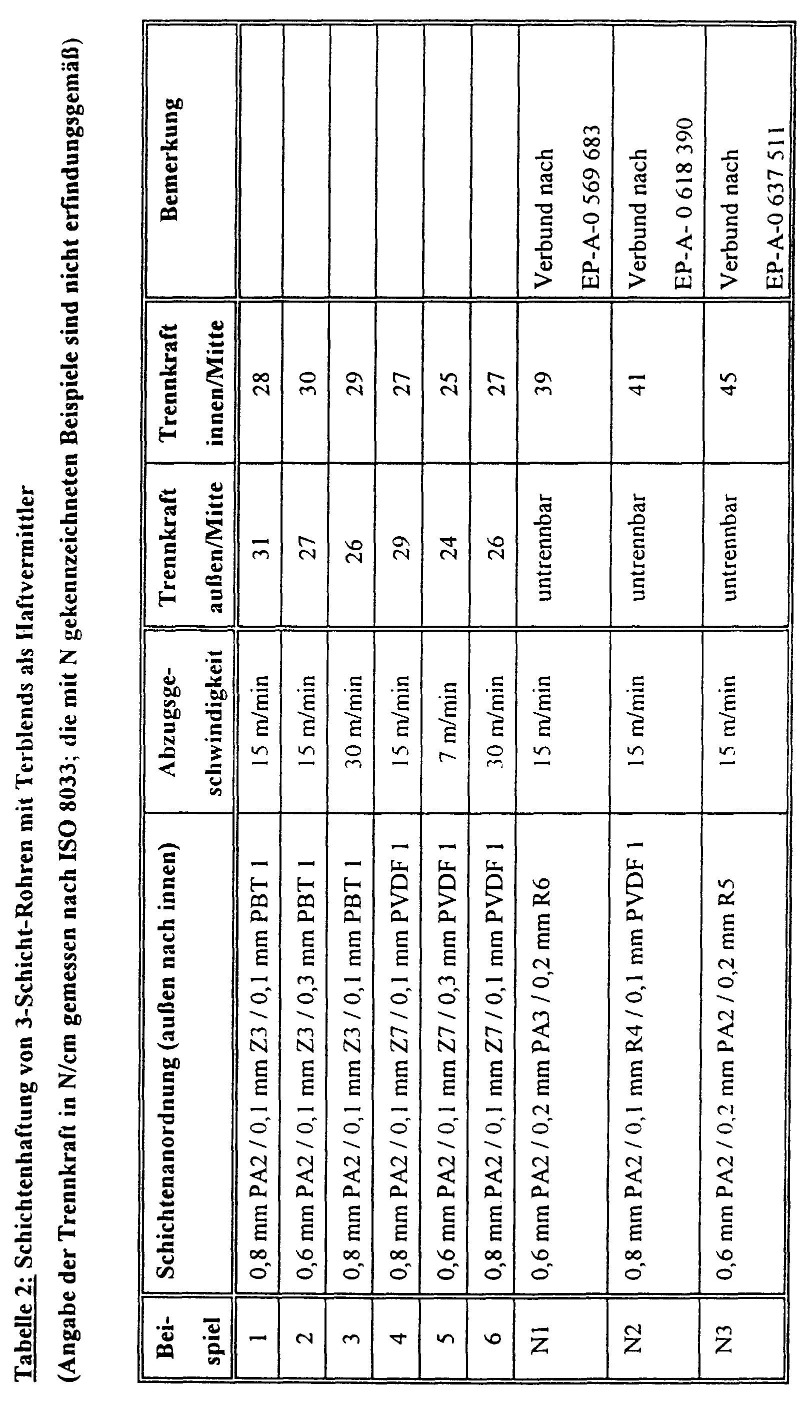

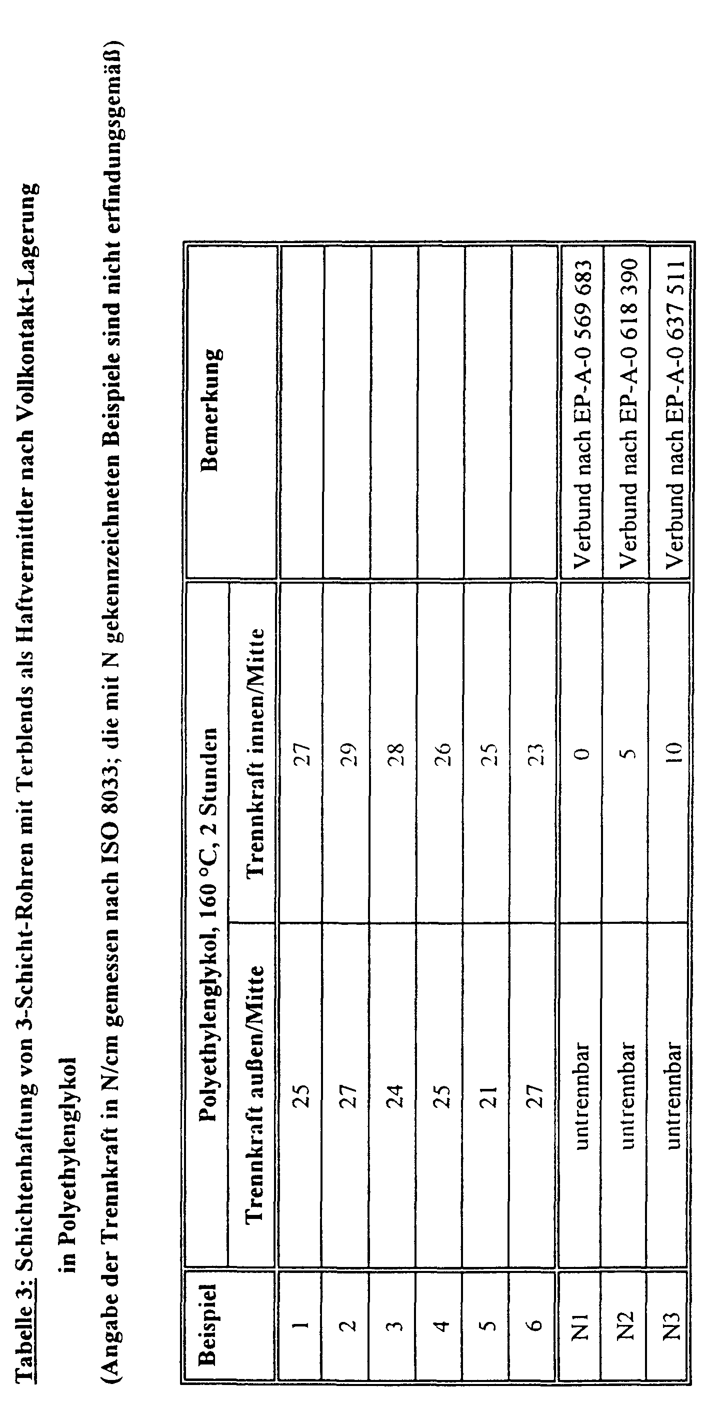

## Patentansprüche

1. Formmasse, die im wesentlichen aus folgenden Komponenten besteht:
a) 5 bis 95 Gew.-Tln. eines aminogruppenhaltigen Polymeren als Polymer A,
b) 95 bis 5 Gew.-Tln. eines Polymeren B, ausgewählt aus der Gruppe thermoplastische Polyester und Fluorpolymere,
wobei die Summe der Komponenten a) und b) 100 Gew.-Tle. ergibt, sowie
c) 1 bis 90 Gew.-Tln. eines Verträglichkeitsvermittlers aus einem (Alkyl)acrylsäureester-Polymeren,
mit der Maßgabe, daß dann, wenn das Polymere B ein thermoplastischer Polyester ist, das (Alkyl)acrylsäureester-Polymer 10 bis 80 Gew.-% des Grundbausteins 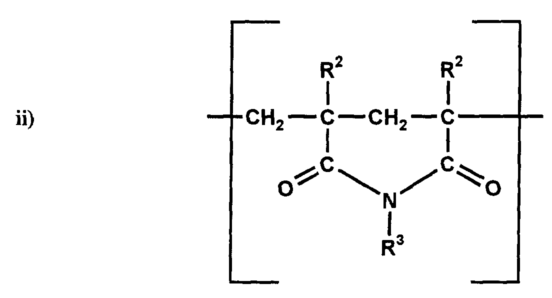 enthält, wobei R² und R³, unabhängig voneinander, den Rest (CₙH₂ₙ₊₁) mit n = 0 bis 6 bedeuten.

2. Formmasse gemäß Anspruch 1,
dadurch gekennzeichnet,
daß das aminogruppenhaltige Polymere ein Polyamid oder ein aminiertes Polyolefin ist.

3. Formmasse gemäß einem der vorhergehenden Ansprüche,
dadurch gekennzeichnet,
daß das Fluorpolymer Polyvinylidenfluorid ist.

4. Formmasse gemäß einem der vorhergehenden Ansprüche,
dadurch gekennzeichnet,
daß das (Alkyl)acrylsäureester-Polymer folgende Grundbausteine enthält:
i) 14 bis 90 Gew.-% 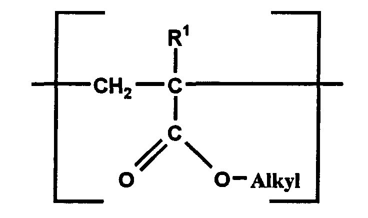
ii) 10 bis 80 Gew.-% 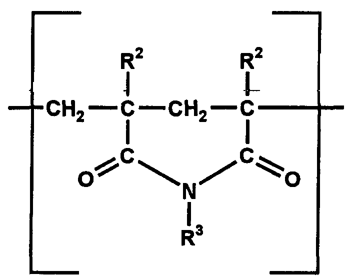
iii) 0 bis 30 Gew.-% 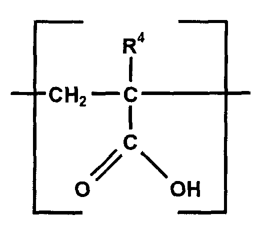
iiii) 0 bis 20 Gew.-% 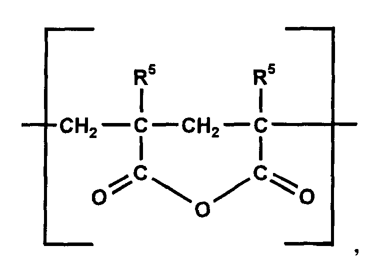
wobei Alkyl = Methyl, Ethyl, Propyl, Butyl, Pentyl, Hexyl,
R¹ bis R⁵ = (CₙH₂ₙ₊₁) mit n = 0 bis 6
und die Substituenten gleich oder verschieden sein können.

5. Formmasse gemäß Anspruch 4,
dadurch gekennzeichnet,
daß im (Alkyl)acrylsäureester-Polymer der Grundbaustein i) zu 20 bis 85 Gew.-%, der Grundbaustein ii) zu 10 bis 75 Gew.-%, der Grundbaustein iii) zu 0 bis 15 Gew.-% und der Grundbaustein iiii) zu 7 bis 20 Gew.-% enthalten ist.

6. Formmasse gemäß Anspruch 4,
dadurch gekennzeichnet,
daß im (Alkyl)acrylsäureester-Polymer der Grundbaustein i) zu 30 bis 70 Gew.-%, der Grundbaustein ii) zu 20 bis 40 Gew.-%, der Grundbaustein iii) zu 1 bis 15 Gew.-% und der Grundbaustein iiii) zu 8 bis 12 Gew.-% enthalten ist.

7. Formmasse gemäß einem der Ansprüche 4 bis 6,
dadurch gekennzeichnet,
daß Alkyl sowie R¹ bis R⁵ eine Methylgruppe darstellen.

8. Formmasse gemäß einem der Ansprüche 4 bis 7,
dadurch gekennzeichnet,
daß im (Alkyl)acrylsäureester-Polymer als weitere Monomere bis zu 50 Gew.-% Ethen, Styrol, Maleinsäureanhydrid, Itaconsäure, Glycidylacrylat und/oder Glycidylmethacrylat einpolymerisiert sind.

9. Mehrschichtverbund, der die Schichtenkonfiguration A/C/B enthält, wobei
I. die Schicht A aus einer Formmasse besteht, die zu mindestens 50 Gew.-% ein aminogruppenhaltiges Polymeres als Polymer A enthält und
II. die Schicht B aus einer Formmasse besteht, die zu mindestens 50 Gew.-% ein Polymer B enthält, während
III. die Schicht C aus einer Formmasse besteht, die im wesentlichen aus folgenden Komponenten besteht:
a) 5 bis 95 Gew.-Tln. des Polymeren A,
b) 95 bis 5 Gew.-Tln. des Polymeren B,
wobei die Summe der Komponenten a) und b) 100 Gew.-Tle. ergibt, sowie
c) 1 bis 90 Gew.-Tln. eines Verträglichkeitsvermittlers aus einem (Alkyl)acrylsäureester-Polymeren.

10. Mehrschichtverbund gemäß Anspruch 9,
dadurch gekennzeichnet,
daß das aminogruppenhaltige Polymere ein Polyamid oder ein aminiertes Polyolefin ist.

11. Mehrschichtverbund gemäß einem der Ansprüche 9 und 10,
dadurch gekennzeichnet,
daß das Polymere B ein thermoplastischer Polyester oder ein Fluorpolymer ist.

12. Mehrschichtverbund gemäß Anspruch 11,
dadurch gekennzeichnet,
daß das Fluorpolymer Polyvinylidenfluorid ist.

13. Mehrschichtverbund gemäß einem der Ansprüche 9 bis 12,
dadurch gekennzeichnet,
daß das (Alkyl)acrylsäureester-Polymer folgende Grundbausteine enthält:
i) 20 bis 100 Gew.-% 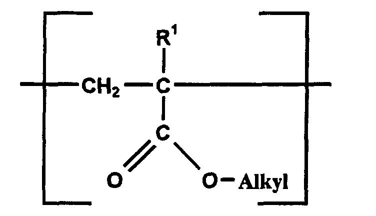
ii) 0 bis 80 Gew.-% 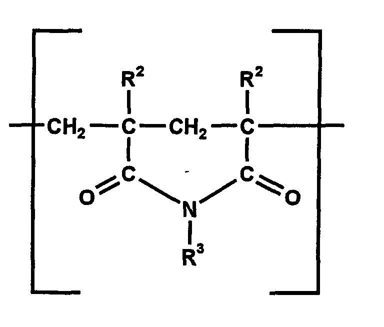
iii) 0 bis 30 Gew.-% 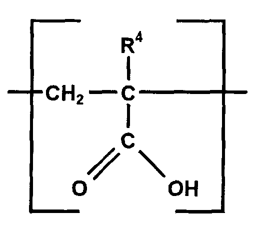
iiii) 0 bis 20 Gew.-% 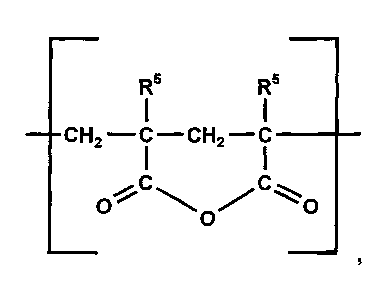
wobei Alkyl = Methyl, Ethyl, Propyl, Butyl, Pentyl, Hexyl,
R¹ bis R⁵ = (CₙH₂ₙ₊₁) mit n = 0 bis 6
und die Substituenten gleich oder verschieden sein können.

14. Mehrschichtverbund gemäß Anspruch 13,
dadurch gekennzeichnet,
daß im (Alkyl)acrylsäureester-Polymer der Grundbaustein i) zu 14 bis 85 Gew.-%, der Grundbaustein ii) zu 10 bis 75 Gew.-%, der Grundbaustein iii) zu 0 bis 15 Gew.-% und der Grundbaustein iiii) zu 7 bis 20 Gew.-% enthalten ist.

15. Mehrschichtverbund gemäß Anspruch 13,
dadurch gekennzeichnet,
daß im (Alkyl)acrylsäureester-Polymer der Grundbaustein i) zu 30 bis 70 Gew.-%, der Grundbaustein ii) zu 20 bis 40 Gew.-%, der Grundbaustein iii) zu 1 bis 15 Gew.-% und der Grundbaustein iiii) zu 8 bis 12 Gew.-% enthalten ist.

16. Mehrschichtverbund gemäß einem der Ansprüche 13 bis 15,
dadurch gekennzeichnet,
daß im (Alkyl)acrylsäureester-Polymeren Alkyl sowie R¹ bis R⁵ eine Methylgruppe darstellen.

17. Mehrschichtverbund gemäß einem der Ansprüche 13 bis 16,
dadurch gekennzeichnet,
daß im (Alkyl)acrylsäureester-Polymer als weitere Monomere bis zu 50 Gew.-% Ethen, Styrol, Maleinsäureanhydrid, Itaconsäure, Glycidylacrylat und/oder Glycidylmethacrylat einpolymerisiert sind.

18. Mehrschichtverbund gemäß einem der Ansprüche 9 bis 17,
dadurch gekennzeichnet,
daß die Schichtenhaftung zwischen der Schicht C und den Schichten A bzw. B, gemessen nach ISO 8033, jeweils mindestens 10 N/cm beträgt.

19. Mehrschichtverbund gemäß einem der Ansprüche 9 bis 18,
dadurch gekennzeichnet,
daß es sich um ein Rohr oder um einen Behälter handelt.

20. Mehrschichtverbund gemäß Anspruch 19,
dadurch gekennzeichnet,
daß es sich um ein vollständig oder nur in Teilabschnitten gewelltes Rohr handelt.

21. Mehrschichtverbund gemäß einem der Ansprüche 9 bis 20,
dadurch gekennzeichnet, daß eine der zum Verbund gehörenden Schichten oder eine zusätzliche Innenschicht elektrisch leitfähig ausgerüstet ist.

22. Mehrschichtverbund gemäß Anspruch 21,
dadurch gekennzeichnet,
daß sich die elektrisch leitfähige Schicht in direktem Kontakt mit dem zu führenden oder zu bevorratenden Medium befindet und einen Oberflächenwiderstand von maximal 10⁹Ω/square besitzt.

23. Mehrschichtverbund gemäß einem der Ansprüche 19 bis 22, ausgebildet als Kraftstoffleitung, Tankeinfüllstutzen, Vapor Line, Tankstellenleitung, Kühlflüssigkeitsleitung oder als Kraftstoffbehälter.

## Claims

1. A moulding composition consisting essentially of the following components:
a) from 5 to 95 parts by weight of a polymer containing amino groups as polymer A,
b) from 95 to 5 parts by weight of a polymer B selected from the group consisting of thermoplastic polyester and fluoropolymer,
where the sum of the components a) and b) is 100 parts by weight, plus
c) from 1 to 90 parts by weight of a compatibilizer comprising an (alkyl) acrylate polymer,
with the proviso that when the polymer B is a thermoplastic polyester, the (alkyl)acrylate polymer comprises from 10 to 80% by weight of the basic building block: 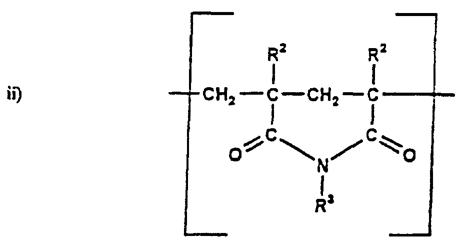 where R² and R³, independently of one another, are the radical (CₙH₂ₙ₊₁) where n = 0-6.

2. A moulding composition according to claim 1, characterized in that the polymer containing amino groups is a polyamide or an aminated polyolefin.

3. A moulding composition according to either of the preceding claims, characterized in that the fluoropolymer is polyvinylidene fluoride.

4. A moulding composition according to any of the preceding claims, characterized in that the (alkyl)acrylate polymer comprises the following basic building blocks:
i) from 14 to 90% by weight of 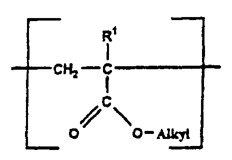
ii) from 10 to 80% by weight of 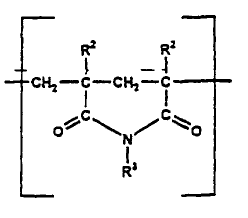
iii) from 0 to 30% by weight of 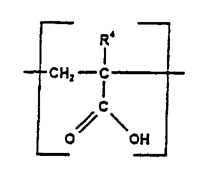
iiii) from 0 to 20% by weight of 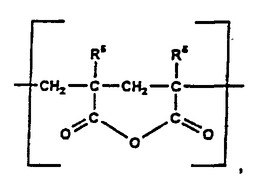
where Alkyl = methyl, ethyl, propyl, butyl, pentyl, hexyl,
R¹ to R⁵ = (CₙH₂ₙ₊₁) where n = 0 - 6
and the substituents can be identical or different.

5. A moulding composition according to claim 4, characterized in that the (alkyl) acrylate polymer comprises from 20 to 85% by weight of the basic building block i), from 10 to 75% by weight of the basic building block ii), from 0 to 15% by weight of the basic building block iii), and from 7 to 20% by weight of the basic building block iiii).

6. A moulding composition according to claim 4, characterized in that the (alkyl) acrylate polymer comprises from 30 to 70% by weight of the basic building block i), from 20 to 40% by weight of the basic building block ii), from 1 to 15% by weight of the basic building block iii), and from 8 to 12% by weight of the basic building block iiii).

7. A moulding composition according to any of claims 4 to 6, characterized in that Alkyl and R¹ to R⁵ are methyl groups.

8. A moulding composition according to any of claims 4 to 7, characterized in that the (alkyl) acrylate polymer comprises as further monomers in copolymerized form up to 50% by weight of ethene, styrene, maleic anhydride, itaconic acid, glycidyl acrylate and/or glycidyl methacrylate.

9. A multilayer composite having the layer configuration A/C/B, wherein
I. the layer A comprises a moulding composition which comprises at least 50% by weight of a polymer containing amino groups as polymer A and
II. the layer B comprises a moulding composition which comprises at least 50% by weight of a polymer B, while
III. the layer C comprises a moulding composition which consists essentially of the following components:
a) from 5 to 95 parts by weight of the polymer A,
b) from 95 to 5 parts by weight of the polymer B,
where the sum of the components a) and b) is 100 parts by weight, plus
c) from 1 to 90 parts by weight of a compatibilizer comprising an (alkyl)acrylate polymer.

10. A multilayer composite according to claim 9, characterized in that the polymer containing amino groups is a polyamide or an aminated polyolefin.

11. A multilayer composite according to either of claims 9 and 10, characterized in that the polymer B is a thermoplastic polyester or a fluoropolymer.

12. A multilayer composite according to claim 11, characterized in that the fluoropolymer is polyvinylidene fluoride.

13. A multilayer composite according to any of claims 9 to 12, characterized in that the (alkyl)acrylate polymer comprises the following basic building blocks:
i) from 20 to 100% by weight of 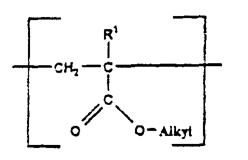
ii) from 0 to 80% by weight of 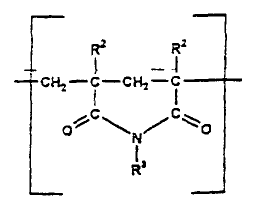
iii) from 0 to 30% by weight of 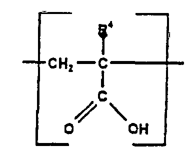
iiii) from 0 to 20% by weight of 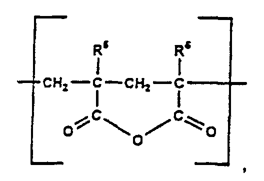
where Alkyl = methyl, ethyl, propyl, butyl, pentyl, hexyl,
R¹ to R⁵ = (CₙH₂ₙ₊₁) where n = 0 - 6
and the substituents can be identical or different.

14. A multilayer composite according to claim 13, characterized in that the (alkyl) acrylate polymer comprises from 14 to 85% by weight of the basic building block i), from 10 to 75% by weight of the basic building block ii), from 0 to 15% by weight of the basic building block iii) and from 7 to 20% by weight of the basic building block iiii).

15. A multilayer composite according to claim 13, characterized in that the (alkyl) acrylate polymer comprises from 30 to 70% by weight of the basic building block i), from 20 to 40% by weight of the basic building block ii), from 1 to 15% by weight of the basic building block iii) and from 8 to 12% by weight of the basic building block iiii).

16. A multilayer composite according to any of claims 13 to 15, characterized in that, in the (alkyl) acrylate polymer, Alkyl and R¹ to R⁵ are methyl groups.

17. A multilayer composite according to any of claims 13 to 16, characterized in that the (alkyl) acrylate polymer comprises as further monomers in copolymerized form up to 50% by weight of ethene, styrene, maleic anhydride, itaconic acid, glycidyl acrylate and/or glycidyl methacrylate.

18. A multilayer composite according to any of claims 9 to 17, characterized in that the adhesion between the layer C and the layers A and B, measured in accordance with ISO 8033, is in each case at least 10 N/cm.

19. A multilayer composite according to any of claims 9 to 18 which is a pipe or a container.

20. A multilayer composite according to claim 19 which is a pipe which is completely corrugated or corrugated only in some sections.

21. A multilayer composite according to any of claims 9 to 20, characterized in that one of the layers belonging to the composite or an additional inner layer is made electrically conductive.

22. A multilayer composite according to claim 21, characterized in that the electrically conductive layer is in direct contact with the medium to be conveyed or stored and has a surface resistance of at most 10⁹ Ω cm.

23. A multilayer composite according to any of claims 19 to 22 in the form of a fuel line, tank filling port, vapour line, filling station line, a line for cooling fluid or a fuel container.

## Revendications

1. Masse moulée composée pour l'essentiel des composants suivants :
a) de 5 à 95 parties en poids d'un polymère portant un groupe amino en tant que polymère A,
b) de 95 à 5 parties en poids d'un polymère B choisi dans le groupe des polyesters et des fluoropolymères thermoplastiques,
pour lesquelles la somme des composants a) et b) représente 100 parties en poids, ainsi que,
c) de 1 à 90 parties en poids d'un agent qui facilite la compatibilité à base de polymères d'ester d'acide (alkyl)acrylique,
avec la restriction que ensuite, lorsque le polymère B est un polyester thermoplastique, le polymère d'ester d'acide (alkyl)acrylique contient de 10 à 80 % en poids de l'élément structurel de base, 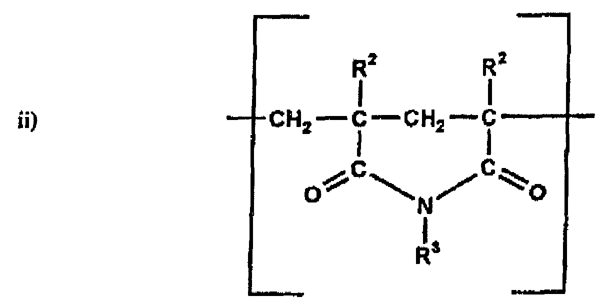
dans lequel R² et R³ indépendamment l'un de l'autre, signifient le reste (CₙH₂ₙ₊₁) avec n = de 0 à 6.

2. Masse moulée selon la revendication 1,
caractérisée en ce que
le polymère qui porte un groupe amino est un polyamide ou une polyoléfine aminée.

3. Masse moulée selon l'une quelconque des revendications précédentes,
caractérisée en ce que
le fluoropolymère est le fluorure de polyvinylidène.

4. Masse moulée selon l'une quelconque des revendications précédentes,
caractérisée en ce que
le polymère d'ester d'acide (alkyl)acrylique contient les éléments structurels de base suivants :
i) de 14 à 90% en poids de, 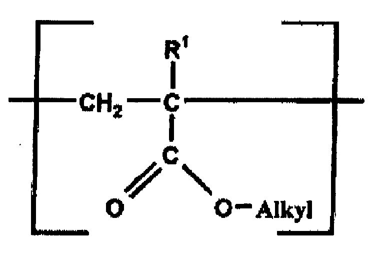
ii) de 10 à 80% en poids de, 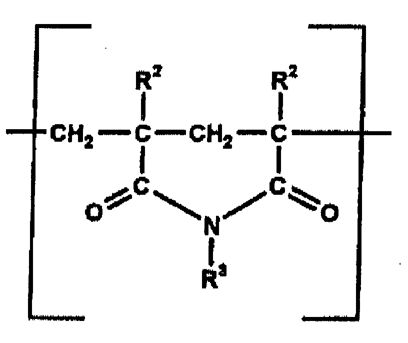
iii)de 0 à 30% en poids de 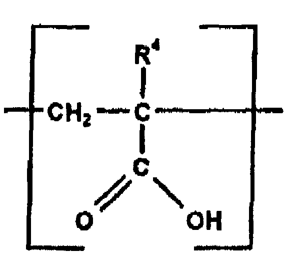
iiii)de 0 à 20% en poids de 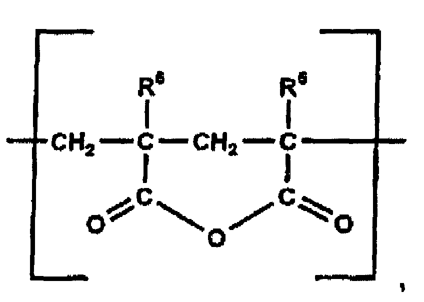
dans lesquels alkyl = méthyl, éthyl, propyl, butyl, pentyl, hexyl,
R¹ à R⁵ = (CₙH₂ₙ₊₁) avec n = 0 à 6,
et les substituants peuvent être identiques ou différents.

5. Masse moulée selon la revendication 4,
caractérisée en ce que
dans le polymère d'ester d'acide (alkyl)acrylique, l'élément structurel de base i) est contenu pour de 20 à 85 % en poids, l'élément structurel de base ii) pour de 10 à 75 % en poids, l'élément structurel de base iii) pour de 0 à 15 % en poids et l'élément structurel de base iiii) pour 7 à 20 % en poids.

6. Masse moulée selon la revendication 4,
caractérisée en ce que
dans le polymère d'ester d'acide (alkyl)acrylique, l'élément structurel de base i) est contenu pour de 30 à 70 % en poids, l'élément structurel de base ii) pour de 20 à 40 % en poids, l'élément structurel de base iii) pour de 1 à 15 % en poids et l'élément structurel de base iiii) pour 8 à 12 % en poids.

7. Masse moulée selon l'une quelconque des revendications 4 à 6,
caractérisée en ce que
le radical alkyle ainsi que R¹ à R⁵ représentent un groupe méthyle.

8. Masse moulée selon l'une quelconque des revendications 4 à 7,
caractérisée en ce que
dans le polymère d'ester d'acide (alkyl)acrylique on introduit par polymérisation comme autres polymères jusqu'à 50 % en poids d'èthène, de styrène, d'anhydride maléique, d'acide itaconique, d'acrylate de glycidyle, et/ou de méthacrylate de glycidyle.

9. Assemblage à plusieurs couches qui contient la configuration A/C/B dans lequel,
I) la couche A consiste en une masse moulée qui renferme au moins 50 % en poids d'un polymère contenant un groupe amino en tant que polymère A,
II) la couche B consiste en une masse moulée qui renferme au moins 50 % en poids d'un polymère B, tandis que
III) la couche C consiste en une masse moulée qui est formée essentiellement des composants auivants :
a) de 5 à 95 parties en poids du polymère A,
b) de 95 à 5 parties en poids du polymère B,
pour lesquels la somme des composants a) et b) fournit 100 parties en poids ainsi que,
c) de 1 à 90 parties en poids d'un agent qui favorise la compatibilité en un polymère d'ester d'acide (alkyl)acrylique.

10. Assemblage à plusieurs couches selon la revendication 9,
caractérisé en ce que
le polymère contenant un groupe amino est un polyamide ou une polyoléfine aminée.

11. Assemblage à plusieurs couches selon l'une quelconque des revendications 9 et 10,
caractérisé en ce que
le polymère B est un polyester thermoplastique ou un fluoropolymère.

12. Assemblage à plusieurs couches selon la revendication 11,
caractérisé en ce que
le fluoropolymère est le fluorure de polyvinylidène.

13. Assemblage à plusieurs couches selon l'une quelconque des revendications 9 à 12,
caractérisé en ce que
le polymère d'ester d'acide alkylacrylique contient les éléments structurels de base suivants :
i) de 20 à 100% en poids de 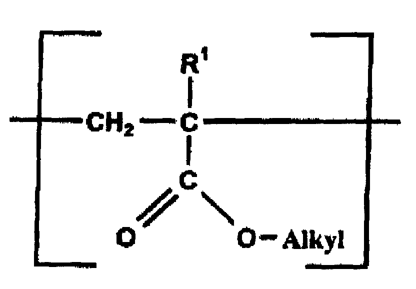
ii) de 0 à 80% en poids de 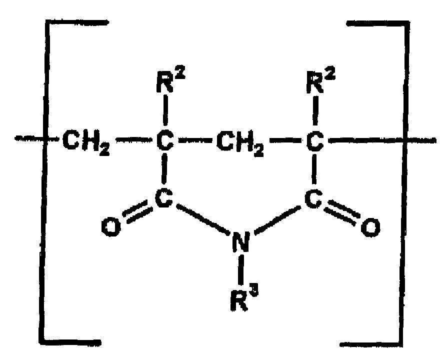
iii)de 0 à 30% en poids de 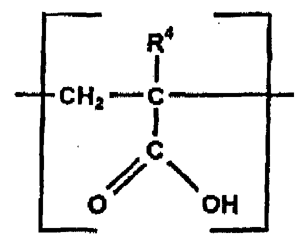
iiii) de 0 à 20% en poids de 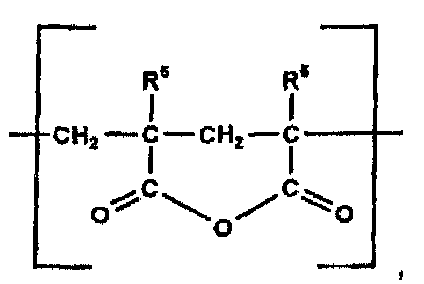
dans lesquels Alkyl = méthyl, éthyl, propyl, butyl, pentyl, hexyl,
R¹ à R⁵ = (CₙH₂ₙ₊₁) avec n = 0 à 6,
et les substituants peuvent être identiques ou différents.

14. Assemblage à plusieurs couches selon la revendication 13,
caractérisé en ce que
dans le polymère d'ester d'alkyle d'acide (alkyl)acrylique, l'élément structurel de base i) est contenu pour 14 à 85 % en poids, l'élément structurel de base ii) pour 10 à 75 % en poids, l'élément structurel de base iii) pour 0 à 15 % en poids, et l'élément structurel de base iiii) pour 7 à 20 % en poids.

15. Assemblage à plusieurs couches selon la revendication 13,
caractérisé en ce que
dans le polymère d'ester d'alkyle d'acide (alkyl)acrylique, l'élément structurel de base i) est contenu pour 30 à 70 % en poids, l'élément structurel de base ii) pour 20 à 40 % en poids, l'élément structurel de base iii) pour 1 à 15 % en poids, et l'élément structurel de base iiii) pour 8 à 12 % en poids.

16. Assemblage à plusieurs couches selon l'une quelconque des revendications 13 à 15,
caractérisé en ce que
dans les polymères d'ester d'acide (alkyl)acrylique, alkyle ainsi que R¹ à R⁵ représentent un groupe méthyle.

17. Assemblage à plusieurs couches selon l'une quelconque des revendications 13 à 15,
caractérisé en ce que
dans les polymères d'esters d'acide (alkyl)acrylique on introduit par polymérisation comme monomères supplémentaires jusqu'à 50 % en poids d'éthène, de styrène, d'anhydride maléique, d'acide itaconique, d'acrylate de glycidyle, et/ou de méthacrylate de glycidyle.

18. Assemblage à plusieurs couches selon l'une quelconque des revendications 9 à 17,
caractérisé en ce que
l'adhésion des couches entre la couche C et les couches A ou B, mesurée selon la norme ISO 8033, s'élève à chaque fois au moins à 10 N/cm.

19. Assemblage à plusieurs couches selon l'une quelconque des revendications 9 à 18,
caractérisé en ce qu'
il s'agit d'un tube ou d'un récipient.

20. Assemblage à plusieurs couches selon la revendication 19,
caractérisé en ce qu'
il s'agit d'un tube ondulé complètement ou seulement en tronçons partiels.

21. Assemblage à plusieurs couches selon l'une quelconque des revendications 9 à 20,
caractérisé en ce qu'
une des couches appartenant à l'assemblage ou une couche interne supplémentaire est équipée d'une manière conductrice de l'électricité.

22. Assemblage à plusieurs couches selon la revendication 21,
caractérisé en ce que
la couche conductrice de l'électricité se trouve en contact direct avec le milieu à conduire ou à alimenter au préalable, et possède une résistance en surface d'au maximum 10⁹Ω/carré.

23. Assemblage à plusieurs couches selon l'une quelconque des revendications 19 à 22,
formé sous forme de conduite pour carburants, de bouchon de remplissage de réservoir, de « vapor line », de conduite pour stations d'essence, de conduites pour liquides de refroidissement ou sous forme de réservoir pour carburants.
